# EUROPÄISCHE PATENTSCHRIFT

(11) **EP 3 486 437 B1**
(45) Veröffentlichungstag und Bekanntmachung des Hinweises auf die Patenterteilung: **20.12.2023**
(21) Anmeldenummer: 18177378.9
(22) Anmeldetag: 12.06.2018
(51) Int. Cl.: F01D 25/12, F01D 25/16, F01D 25/18, F02C 6/12, F01M 1/00, F01M 11/00, F01M 11/02, F02B 39/14, F16C 33/10, F02C 7/06, F16C 33/66

(54) **ABGASTURBOLADER MIT GEKAMMERTEM ÖLVERTEILERRAUM**
EXHAUST GAS TURBOCHARGER WITH CHAMBERED OIL DISTRIBUTION AREA
TURBOCOMPRESSEUR POURVU D'ESPACE DE DISTRIBUTEUR D'HUILE COMPARTIMENTÉ

(30) Priorität: 30.06.2017 DE 102017114609
(43) Veröffentlichungstag der Anmeldung: 22.05.2019
(73) Patentinhaber: MAN Energy Solutions SE, 86153 Augsburg (DE)
(72) Erfinder: Löwlein, Oswald, 89231 Neu-Ulm (DE); Köhler, Matthias, 86529 Schrobenhausen (DE)

(56) Entgegenhaltungen:
- EP-B1- 2 054 597
- WO-A1-2016/067715
- WO-A1-2017/094187
- DE-A1- 19 925 773
- DE-A1- 19 925 779
- DE-T5-112011 101 660
- JP-A- S62 101 837

## Beschreibung

Die Erfindung betrifft einen Abgasturbolader.

Die Erfindung betrifft auch eine Brennkraftmaschine mit wenigstens einem solchen Abgasturbolader.

Insbesondere Radial- und Axiallager eines Abgasturboladers müssen im Betrieb mit Schmieröl versorgt werden. Dazu wird der Abgasturbolader an einen pumpengetriebenen Schmierölkreislauf angeschlossen und an einem Flansch Schmieröl zugeführt und an einem zweiten Flansch der Schmierölablauf gewährleistet. An Stelle eines auf dem Abgasturbolader aufgesetzten Notöltanks oder eines vom Abgasturbolader abgesetzten Notöltanks mit den hierfür benötigten Verbindungsleitungen kann auch ein ausreichend großer Ölverteilerraum in das Lagergehäuse des Turboladers integriert werden. Daher kann im Lagergehäuse des Abgasturboladers ein integrierter Öltank vorgesehen werden.

Ein Grund für ein Vorsehen eines integrierten Öltanks bzw. Ölverteilerraums ist die dann im Lagergehäuse integrierte Notversorgung des Abgasturboladers mit Schmieröl im Versagensfall des Schmierölkreislaufs, z.B. infolge einer defekten Pumpe. Dieser Öltank bzw. Ölverteilerraum im Lagergehäuse versorgt dann temporär Ölverbraucher des Abgasturboladers wie Radiallager und Axiallager bei einem Ausfall der Pumpe oder einer Störung in der Schmierölversorgung mit Schmieröl und soll Lagerschäden bis zum Stillstand des Abgasturboladers verhindern.

Ein weiterer Grund für einen solchen integrierten Ölverteilerraum ist die einfachere Versorgung verschiedener Ölverbraucher und insbesondere von Radial- und Axiallagern mit Schmieröl. Denn in einem Abgasturbolader müssen stets mehrere Lager und gegebenenfalls weitere Ölverbraucher wie etwa eine Spritzölkühlung diverser Wände mit Schmieröl versorgt werden. Dies geschieht dann durch den im Lagergehäuse integrierten Ölverteilerraum. Durch eine geeignete Anordnung des Ölverteilerraums im Lagergehäuse können die verschiedenen Ölverbraucher über kurze Ölleitungskanäle bzw. Ölbohrungen über den Ölverteilerraum schmierölversorgt werden. Dies spart aufwendig lange gebohrte oder gegossene Ölkanäle im Lagergehäuse.

Ein im Lagergehäuse integrierter Öltank und ein integrierter Ölverteilerraum unterscheiden sich im Wesentlichen durch das umfasste Ölvolumen. Ein integrierter Öltank mit größerem Ölvolumen kann bevorzugt für eine Notschmierversorgung ausgelegt werden, wohingegen das Ölvolumen des Ölverteilerraums dafür nicht ausgelegt bzw. nicht ausreichend ist. Im Falle eines integrierten Ölverteilerraums kann je nach Ölbedarf ein zusätzlicher externer Öltank erforderlich sein. Durch die Ölversorgung über Kanäle oder den integrierten Ölverteilerraum bzw. integrierten Öltank können alle Ölverbraucher für etwa gleich lange Zeit mit Schmieröl versorgt werden.

Aus unterschiedlichen Gründen, wie z.B. Wärmeabfuhr in dem turbinenseitigen Lagern kann es jedoch notwendig oder sinnvoll sein, die Lager im Notfall (Störung in der Ölversorgung) unterschiedlich lange mit Schmieröl zu versorgen. Mit anderen Worten sollen verschiedene Ölverbraucher oder verschiedene Lagerstellen durch einen integrierten Ölverteilerraum bzw. integrierten Öltank zeitlich mehr oder weniger lange mit Öl versorgt werden können. Dies geschieht nach dem Stand der Technik, z.B. gemäß EP 2 054 597 B1 durch eine getrennte Ölentnahme von Schmieröl an unterschiedlichen Niveaus des integrierten Öltanks bzw. des integrierten Ölverteilerraums, nämlich dadurch, dass Mündungen von Öl versorgenden Leitungen auf unterschiedlichen Höhenniveaus im Öltank bzw. im Ölverteilerraum angeordnet sind, um eines der beiden vom Öltank bzw. vom Ölverteilerraum versorgten Radiallager zu bevorzugen. Lediglich dadurch ist jedoch eine bedarfsgerechte Ölversorgung der verschiedenen Ölverbraucher eines Abgasturboladers als noch nicht ausreichend anzusehen. EP 2 054 597 B1 offenbart ein Konzept für einen Abgasturbolader mit einem Notöltank.

WO 2016/067715 A1 offenbart einen Abgasturbolader, bei welchem in einem Ölverteilerraum zwei Ölrohre mit unterschiedlichen Niveaus angeordnet sind.

JP S62 101837 A offenbart einen Turbolader, bei dem Luft in einem enthaltenen Schmiermittelkopftank durch eine Entlüftungsleitung ausgestoßen wird, wenn Schmiermittel von einem Einlassrohr zugeführt wird.

DE 199 25 779 A1 und DE 199 25 773 A1 betreffen jeweils Lösungen mit einem Notöltank.

DE 11 2011 101 660 T5 betrifft einen Abgasturbolader der einen Ölsammelraum am turbinenseitigen Ende aufweist.

WO 2017/094187 A1 beschäftigt sich mit einem Turbolader der zusätzlich mit einer Betriebszustandserfassungseinheit versehen ist, die den Betriebszustand des Turboladers erfasst und einer Schmieröl-Einstelleinheit, die die Durchflussmenge des durch das Schmieröl fließenden Schmieröls nach dem Betriebszustand ändert.

Der vorliegenden Erfindung liegt die Aufgabe zugrunde, einen Abgasturbolader der eingangs erwähnten Art derart weiter zu entwickeln, dass verschiedene seiner Ölverbraucher noch bedarfsgerechter mit Öl versorgt werden können. Weiterhin soll auch eine Brennkraftmaschine mit wenigstens einem solchen Abgasturbolader zur Verfügung gestellt werden.

Diese Aufgabe wird durch die Merkmale von der Ansprüche 1 und 14 gelöst.

Die Erfindung geht aus von einem Abgasturbolader umfassend: Ein Gehäuse einen im Gehäuse integrierten Ölverteilerraum, wenigstens einen im Gehäuse ausgebildeten Ölzulauf, welcher mit dem Ölverteilerraum in Verbindung steht und über welchen ein Ölstrom in den Ölverteilerraum einströmt, mehrere Ölverbraucher, welche jeweils eine Strömungsverbindung zu dem Ölverteilerraum aufweisen.

Unter dem Gehäuse des Abgasturboladers ist jegliches Gehäuse zu verstehen, welches Bauteile oder Baugruppen des Abgasturboladers haust. Unter einem Ölverteilerraum ist jeglicher mit Schmieröl wenigstens teilweise befüllter oder befüllbarer Raum zu verstehen, aus welchem dann das Schmieröl auf die verschiedenen Ölverbraucher verteilt wird. Unter Öl ist Schmieröl zu verstehen, welches zur Schmierung der Ölverbraucher dient.

Der Ölverteilerraum ist durch wenigstens eine Trennwand in wenigstens zwei insbesondere jeweils zueinander benachbart angeordnete Ölkammern unterteilt, welche in Bezug zu dem Ölzulauf derart angeordnet und ausgebildet sind, dass ein über den Ölzulauf zufließender Ölstrom in jede der wenigstens zwei Ölkammern gelangen kann. Weiterhin ist jede der wenigstens zwei Ölkammern über wenigstens einen Ölkanal mit wenigstens einem bestimmten und der jeweiligen Ölkammer zugeordneten Ölverbraucher verbunden.

Die Mündungen von wenigstens zwei Ölkanälen in derselben Ölkammer weisen bezogen in Richtung der Schwerkraft gesehen unterschiedliche Niveaus auf. Dann kann über diese Niveaus die zeitliche Abfolge des Ölabflusses aus der betreffenden Ölkammer in die betreffenden Ölkanäle vorab bestimmt werden. Zusätzlich oder alternativ weisen die Mündungen von wenigstens zwei Ölkanälen, welche mit unterschiedlichen Ölkammern verbunden sind, in Richtung der Schwerkraft gesehen unterschiedliche Niveaus auf. Dann kann über diese Niveaus die zeitliche Abfolge des Ölabflusses aus den betreffenden Ölkammern in die den Ölkammern jeweils zugeordneten Ölkanäle und damit in die betreffenden Ölverbraucher vorab bestimmt werden.

Der Ölzulauf und der Ölverteilerraum stellen Elemente des pumpengetriebenen Schmierölkreislaufs dar. Mit anderen Worten sind dann der Ölzulauf und der Ölverteilerraum Elemente des ordentlichen Schmierölkreislaufs, welche von dem Ölstrom bei intaktem oder bei ausgefallenen pumpengetriebenen Schmierölkreislauf in jedem Fall durchströmt werden.

Der Ölzulauf und auch der Ölverteilerraum sind an einen in Bezug zu dem Gehäuse externen Öltank angeschlossen, welcher dann ein Element des pumpengetriebenen Schmierölkreislaufs bildet.

Ferner ist eine Leiteinrichtung vorgesehen, welche derart ausgebildet und angeordnet ist, dass sie den aus dem externen Öltank durch den Ölzulauf einströmenden Ölvolumengesamtstrom ausschließlich in eine erste Ölkammer der wenigstens zwei Ölkammern einleitet.

Der wenigstens eine Ölkanal bildet die Strömungsverbindung zwischen der betreffenden Ölkammer und der oder des diesem zugeordneten Ölverbraucher(s) und ist möglichst kurz auszuführen.

Die Ölkammern sind dann einerseits von einer Trennwand und andererseits von einer inneren Wandung des Ölverteilerraums oder nur von Trennwänden begrenzt. Die wenigstens eine Trennwand ist beispielsweise an einer inneren Wandung des Ölverteilerraums befestigt bzw. festgelegt. Die Ölkammern sind beispielsweise in der Richtung der Schwerkraft gesehen nach oben hin wenigstens teilweise offen. Über den Ölzulauf zugeführtes Öl kann dann von oben her in die nach oben offenen Ölkammern einfließen. Die Gestaltung und Lage der Ölkammern und/oder des Ölzulaufs ist vollkommen beliebig. Denkbar ist beispielsweise ein in der Richtung der Schwerkraft gesehen oben, schräg, seitlich oder unten angeordneter Ölzulauf und auch Ölkammern, von welchen wenigstens eine abgeschlossenes Ölvolumen bildet, ausgenommen natürlich einen Zu- und Ablauf von und zu dem Ölvolumen.

Der Ölverteilerraums ist in zwei oder mehrere Ölverteilerteilräume oder Ölkammern unterteilt. Dies ist durch in sich abgeschlossene Ölvolumina der wenigstens zwei Ölkammern oder durch wenigstens eine im Ölverteilerraum angeordnete Trennwand realisiert. Durch die Abtrennung verschiedener Ölkammern im Ölverteilerraum können der oder die an die jeweilige Ölkammer angeschlossenen Ölverbraucher das jeweilige Volumen an Öl und die Ölversorgungszeit individuell festgelegt werden, wenn eine Nachversorgung des Ölverteilerraums infolge von Störungen nicht mehr möglich ist. Denn durch die Ölkanäle, welche im Betrieb des Abgasturboladers ständig Öl zu den Ölverbrauchern nachliefern, sinkt der Ölstand in dem Ölverteilerraum bei ausgefallenem pumpengetriebenen Schmierölkreislauf, so dass aus den anfangs noch vollständig gefüllten Ölkammern Öl abgesaugt wird. Die Größe der Ölvolumina der Ölkammern, welche durch die Lage und Größe der Trennwände bestimmt werden, definieren dann die Ölmenge, welche für den oder die an die betreffende Ölkammer angeschlossenen Verbraucher nach dem Ausfall des pumpengetriebenen Schmierölkreislauf noch zur Verfügung stehen sowie die noch verbleibende Zeit für die Ölversorgung.

So können durch eine geeignete Ausführung wenigstens einer Trennwand beispielsweise Ölverbraucher wie eine Spritzölkühlung für Gehäusewände relativ früh aus der Ölversorgung genommen werden und auch die verschiedenen Lager des Abgasturboladers wie Radiallager und Axiallager für die das Turbinenrad und das Verdichterrad tragende Welle unterschiedlich lange mit Öl versorgt werden.

Durch die vorliegende Erfindung können daher bei einem Ausfall der pumpengetriebenen Schmierölversorgung die einzelnen Ölverbraucher zeitlich individuell und insbesondere gestaffelt mit dem Ölverteilerraum noch vorhandenen Schmieröl versorgt werden. Dadurch kann beispielsweise den wichtigen Lagerstellen wie Radiallager und Axiallager der das Turbinenrad und das Verdichterrad tragenden Welle des Abgasturboladers priorisiert noch ein bestimmtes Ölvolumen für eine bestimmte Ölversorgungszeit bis zum Stillstand des Laufzeugs zur Verfügung gestellt werden.

Wie oben bereits angedeutet, können sich im Gehäuse integrierte Ölverteilerräume sich durch das umfasste Ölvolumen unterscheiden. Ein integrierter Ölverteilerraum mit größerem Ölvolumen kann dann beispielsweise für eine Notschmierölversorgung ausgelegt werden.

Das jeweils von einer Ölkammer aufnehmbare Ölvolumen ist (auch) abhängig von der Ausdehnung der die betreffende Ölkammer begrenzenden Trennwand oder Trennwände in der Richtung der Schwerkraft. Denn wenn durch das Öl ein bestimmtes Niveau erreicht ist, welches dem Niveau des freien Endes der betreffenden Trennwand bzw. der betreffenden Trennwände entspricht, so läuft das Öl beispielsweise in eine benachbarte Ölkammer über.

Durch die in den Unteransprüchen aufgeführten Maßnahmen sind vorteilhafte Weiterbildungen und Verbesserungen der Erfindung möglich.

Gemäß einer bevorzugten Ausführungsform sind wenigstens zwei Ölkammern zur Aufnahme eines jeweils definierten Ölvolumens ausgebildet. Insbesondere können wenigstens zwei Ölkammern zur Aufnahme von Ölvolumina unterschiedlicher Größe ausgebildet sein. Dann können die an die Ölkammern jeweils angeschlossenen Ölverbraucher beispielsweise unterschiedlich lange mit Öl versorgt werden.

Insbesondere kann die wenigstens eine Trennwand ein in den Ölverteilerraum hineinragendes freies erstes Ende, welches beispielsweise in Richtung der Schwerkraft gesehen weist oder eine in diese Richtung weisendem Komponente aufweist und ein zweites, an einen Boden oder eine Wandung des Ölverteilerraum oder an ein anderes Element des Abgasturboladers dichtend angebundenes Ende aufweisen. Weiterhin sind dann beispielsweise die durch die Trennwand entstehenden Ölkammern in Richtung der Schwerkraft gesehen beispielsweise insbesondere nach oben hin wenigstens teilweise offen.

Besonders bevorzugt können auch die freien ersten Enden von wenigstens zwei Trennwänden in Richtung der Schwerkraft gesehen unterschiedliche Niveaus aufweisen. Dies kann ebenfalls in unterschiedlichen Ölvolumina der durch die Trennwände definierten Ölkammern resultieren.

Weiterhin kann in einer Ebene senkrecht zu der wenigstens einen Trennwand gesehen, die Ebene der wenigstens einen Trennwand eine zur Richtung der Schwerkraft parallele Komponente aufweisen. Mit anderen Worten weist dann die Trennwand eine in die vertikale Richtung weisende Komponente auf.

Besonders bevorzugt ist der Ölzulauf in Richtung der Schwerkraft gesehen in einer oberen Wandung des Ölverteilerraums angeordnet. Dann kann die Ölversorgung des Ölverteilerraums bzw. der darin angeordneten Ölkammern mit Restöl noch infolge der Wirkung der Schwerkraft erfolgen, auch wenn die Pumpe des Schmierölkreislaufs bereits ausgefallen ist.

Gemäß einer Weiterbildung dieser Ausführung ist die Leiteinrichtung in dem Ölverteilerraum in Strömungsrichtung des Öls gesehen der wenigstens einen Trennwand vorgeordnet.

Dann kann beispielsweise ein Ölvolumenteilstrom des in die erste Ölkammer eingeleiteten Ölvolumengesamtstrom über das erste freie Ende der Trennwand hinaus in wenigstens eine zweite Ölkammer überlaufen. Dabei kann vorgesehen sein, dass im ordentlichen Normalbetrieb die wenigstens eine zweite Ölkammer ausschließlich von dem über das erste freie Ende der Trennwand überlaufenden Ölvolumenteilstrom ölversorgt ist. Ein erster Ölvolumenteilstrom des bedingt durch die Leiteinrichtung in die erste Ölkammer einströmenden Ölvolumengesamtstroms wird dann infolge des Ölverbrauchs der an diese erste Ölkammer angeschlossenen Ölverbraucher abgesaugt, während ein zweiter Ölvolumenteilstrom bei noch intaktem pumpengetriebenen Schmierölkreislauf über das erste freie Ende der Trennwand in die zweite Ölkammer überläuft, wodurch der (die) an diese zweite Ölkammer angeschlossene(n) Ölverbraucher mit Öl versorgt werden.

Wenn dann aber bei einer Störung des pumpengetriebenen Schmierölkreislaufs (Notölbetrieb) der externe Öltank allmählich leerläuft, so läuft das verbleibende Restöl ausschließlich in die erste Ölkammer nach während weiterhin Öl durch die an die erste und zweite Ölkammer angeschlossenen Ölverbraucher abgesaugt wird. Dadurch sinkt der Ölstand in der ersten Ölkammer, so dass dieser irgendwann niedriger ist als das Niveau der Trennwand an dessen ersten freien Ende. Folglich kann dann kein Ölvolumenteilstrom mehr von der ersten Ölkammer in die zweite Ölkammer überlaufen, welche dann früher leerläuft als die erste Ölkammer. Bedingt durch diese Maßnahmen kann daher die Ölversorgung der oder des an die erste Ölkammer angeschlossenen Verbraucher(s) gegenüber des oder den an die erste Ölkammer angeschlossenen Verbraucher(s) priorisiert werden.

Die Leiteinrichtung kann insbesondere wenigstens eine Leitschaufel aufweisen und in oder nach dem Ölzulauf angeordnet sein. Insbesondere kann auch der Ölzulauf derart angeordnet, ausgebildet bzw. ausgerichtet sein, dass er selbst die Leiteinrichtung ausbildet.

Der Abgasturbolader kann insbesondere Folgendes umfassen: Eine ein Verdichterrad und ein Turbinenrad tragende Welle, ein das Gehäuse bildendes Lagergehäuse mit mehreren Radiallagern als Ölverbraucher zum Lagern der Welle, wobei der Ölverteilerraum in dem Lagergehäuse integriert und der Ölzulauf in dem Lagergehäuse ausgebildet ist und wobei jede der wenigstens zwei Ölkammern über wenigstens einen Ölkanal mit wenigstens einem bestimmten und der jeweiligen Ölkammer zugeordneten Radiallager über wenigstens einen Ölkanal strömungsverbunden ist.

Die mehreren Radiallager umfassen beispielsweise wenigstens ein verdichterseitiges Radiallager und wenigstens ein turbinenseitiges Radiallager der Welle.

In Bezug auf die Welle kann in Umfangsrichtung gesehen der Ölverteilerraum beispielsweise einen kreissektorförmigen Querschnitt aufweisen und die wenigstens eine Trennwand den kreissektorförmigen Querschnitt des Ölverteilerraums in mehrere voneinander getrennte teilsektorförmige Ölkammern unterteilen, wobei wenigstens eine erste teilsektorförmige Ölkammer über wenigstens einen ersten Ölkanal mit dem wenigstens einen verdichterseitigen Radiallager der Welle und wenigstens eine zweite teilsektorförmige Ölkammer über wenigstens einen zweiten Ölkanal mit dem wenigstens einen turbinenseitigen Radiallager verbunden ist.

Weiterhin kann der wenigstens eine erste Ölkanal gegenüber dem wenigstens einen zweiten Ölkanal bezogen auf eine Axialrichtung der Welle axial versetzt angeordnet sein.

Bevorzugt erstreckt sich der Ölverteilerraum in axialer Richtung gesehen über alle Radiallager.

Bevorzugt können die wenigstens zwei Ölverbraucher neben den mehreren Radiallagern wenigstens zusätzlich Folgendes beinhalten: Eine Spritzölkühlungseinrichtung und ein Axiallager der Welle. Dann können beispielsweise beide zusätzliche Ölverbraucher an die erste Ölkammer oder an die zweite Ölkammer über Ölkanäle angeschlossen sein. Denkbar ist aber auch (jeweils) eine eigene Ölkammer für die beiden Ölverbraucher.

Zusätzlich zu den oben erwähnten teilsektorförmigen Ölkammern kann auch wenigstens eine durch eine senkrecht hierzu angeordnete axiale Ölkammer vorgesehen sein, an welche dann die beiden oben erwähnten Ölverbraucher angeschlossen sind.

Der Ölverteilerraum kann bezüglich der Richtung der Schwerkraft wenigstens teilweise oberhalb der wenigstens zwei Ölverbraucher angeordnet sein, so dass eine Nachlieferung von Restöl bei ausgefallenem pumpengetriebenen Schmierölkreislauf noch schwerkraftbedingt von statten gehen kann.

Die Erfindung betrifft auch eine Brennkraftmaschine, welches wenigstens einen oben beschriebenen Abgasturbolader aufweist. Bei der Brennkraftmaschine kann es sich zum Beispiel um einen Dieselmotor, insbesondere um einen mit Schweröl betriebenen Großdieselmotor handeln.

Nachstehend sind Ausführungsbeispiele der Erfindung in der Zeichnung dargestellt und in der nachfolgenden Beschreibung näher erläutert. In der Zeichnung zeigt
- Fig.1: einen Querschnitt durch ein Lagergehäuse einer ein Turbinenrad und ein Verdichterrad tragenden Welle einer nicht erfindungsgemäßenAusführungsform eines Abgasturboladers;
- Fig.2: einen Querschnitt entlang der Linie II-II von Fig.1;
- Fig.3: einen Querschnitt durch ein Lagergehäuse einer weiteren nicht erfindungsgemäßen Ausführungsform eines Abgasturboladers;
- Fig.4: einen Querschnitt durch ein Lagergehäuse einer weiteren nicht erfindungsgemäßen Ausführungsform eines Abgasturboladers;
- Fig.5: einen Querschnitt durch ein Lagergehäuse einer erfindungsgemäßenAusführungsform eines Abgasturboladers;

In den Figuren ist der Abgasturbolader in Gebrauchslage dargestellt, d.h., dass oben, unten oder seitlich dargestellte Bauteile und Baugruppen auch tatsächlich oben, unten oder seitlich angeordnet sind, insbesondere auch in Bezug zur Richtung der Schwerkraft, welche hier vertikal verläuft.

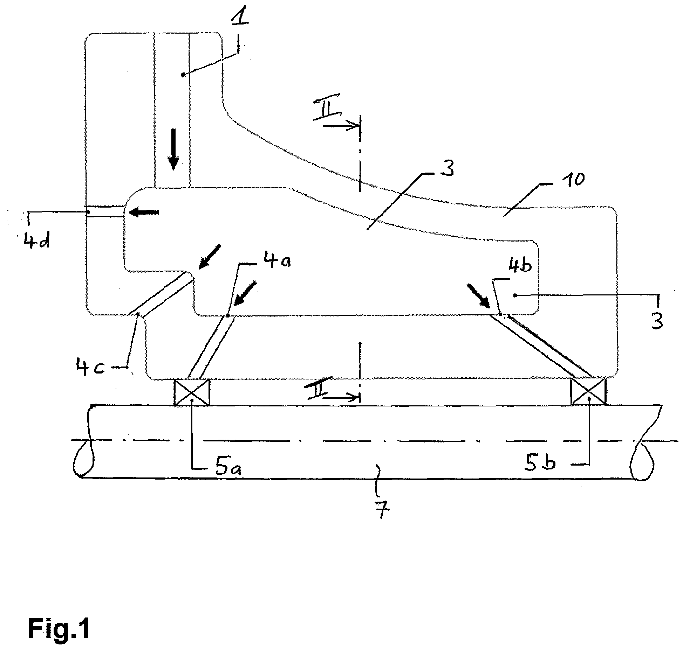

**Fig.1** zeigt einen Querschnitt durch ein Lagergehäuse 10 eines Abgasturboladers gemäß einer nicht erfindungsgemäßen Ausführungsform. In dem Lagergehäuse 10 des Abgasturboladers ist eine Welle 7, welche an einem Ende ein hier nicht gezeigtes Turbinenrad und am anderen Ende ein hier ebenfalls nicht gezeigtes Verdichterrad trägt, drehbar gelagert. An beiden Enden des Lagergehäuses 10 ist jeweils ein Radiallager vorgesehen, nämlich ein verdichterseitiges Radiallager 5a und ein turbinenseitiges Radiallager 5b. Die beiden Radiallager 5a, 5b werden je von einem im Lagergehäuse 10 ausgebildeten Ölkanal 4a, 4b mit Schmieröl aus einem im Lagergehäuse 10 integrierten oder innerhalb des Lagergehäuses ausgebildeten Ölverteilerraum 3 versorgt. Dieser Ölverteilerraum 3 erstreckt sich bevorzugt in axialer Richtung, d.h. in Axialrichtung der Welle 7 gesehen über beide Radiallager 5a, 5b hinweg. Der Ölverteilerraum 3 ist bezüglich der Schwerkraft wenigstens teilweise oberhalb der Radiallager 5a und 5b, bzw. oberhalb der Welle 7 angeordnet, wodurch sichergestellt ist, dass das im Ölverteilerraum gelagerte Öl bei Bedarf ohne externe Pumpe oder Druckbeaufschlagung aufgrund der Schwerkraft in die Radiallager 5a, 5b der Welle 7 fließt. Damit diese auf der Schwerkraft basierende Ölversorgung gewährleistet ist, muss also der Abfluss des Ölverteilerraums 3 bzw. die Mündungen der Ölkanäle 4a, 4b im Ölverteilerraum 6 zumindest auf gleicher Höhe sein wie der tiefste Punkt der Welle 7.

Der Ölverteilerraum 3 wird durch eine im Lagergehäuse 10 bevorzugt in einer oberen Wandung ausgebildeten Ölzulauf 1 mit Schmieröl versorgt, wobei der Ölzulauf hier bevorzugt in Richtung der Schwerkraft gesehen oben in den Ölverteilerraum 3 mündet. Der Ölzulauf 1 und der Ölverteilerraum sind hier bevorzugt in den Strömungsweg des Öls eingebundene Elemente eines ordentlichen pumpengetriebenen Schmierölkreislaufs und werden daher im Zuge der bestimmungsgemäßen Schmierölversorgung der Radiallager 5a, 5b und weiterer weiter untern noch beschriebener Schmierölverbraucher von dem Ölstrom durchflossen oder durchströmt. Alternativ hierzu könnten der Ölzulauf 1 und der Ölverteilerraum auch zusätzlich oder parallel zu dem ordentlichen Schmierölkreislauf und dann auch nur für eine Notölversorgung vorgesehen sein.

Weiterhin ist ein in den Ölverteilerraum 3 mündender Ölkanal 4c vorhanden, welcher andererseits mit einem hier nicht sichtbaren Axiallager der Welle 7 als weiteren Ölverbraucher strömungsverbunden ist. Nicht zuletzt mündet auch ein Ölkanal 4d in den Ölverteilerraum 3, welcher andererseits mit einem hier nicht sichtbaren Spritzöhlkühleinrichtung für Wandungen des Abgasturboladers strömungsverbunden ist. Folglich erfolgt die Ölversorgung der genannten Ölverbraucher des Abgasturboladers vollumfänglich durch den Ölzulauf 1 und den Ölverteilerraum.

Im ordentlichen Normalbetrieb erfolgt die Ölversorgung durch den Ölzulauf 1, den integrierten Ölverteilerraum 3 und die Ölkanäle 4a, 4b, 4c, 4d, so dass der Ölverteilerraum 3 ständig durchspült wird.

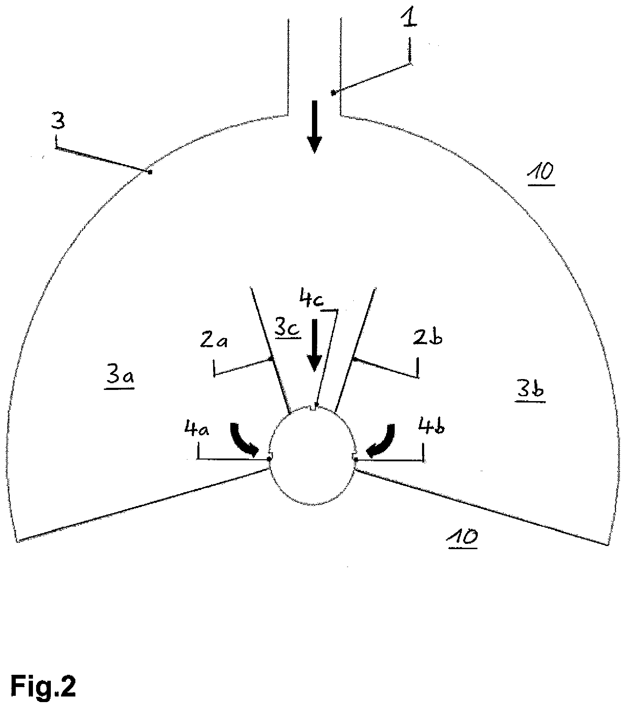

Wie aus **Fig.2** hervorgeht, ist der Ölverteilerraum 3 durch hier beispielsweise zwei Trennwände in drei zueinander jeweils benachbart angeordnete Ölkammern 3a, 3b, 3c unterteilt, welche sich durch den mittels des Ölzulaufs 1 zuströmendem pumpengetriebenen Ölstroms füllen. Insofern ist auch die Lage der Mündung des Ölzulaufs 1 in den Ölverteilerraum bedeutungslos.

Dabei ist beispielsweise die in **Fig.2** linke Ölkammer 3a über den Ölkanal 4a mit dem verdichterseitigen Radiallager 5a, die in **Fig.2** rechte Ölkammer 3b über den Ölkanal 4b mit dem turbinenseitigen Radiallager 5b und die in **Fig.2** mittige Ölkammer 3c über den Ölkanal 4c mit dem Axiallager der Welle 7 verbunden. Damit eine möglichst kurze Ölkanäle 4a, 4b, 4c vorhanden sind, ist dabei klar, dass die Ölkanäle 4a, 4b, 4c in **Fig.2** und nachfolgenden Figuren in eine einzige Zeichenebene projiziert wurden. In Wirklichkeit sind die Ölkanäle 4a, 4b, 4c axial zueinander versetzt angeordnet.

Die Ölkammern 3a, 3b, 3c sind dann einerseits von einer Trennwand 2a oder 2b oder von mehreren Trennwänden 2a, 2b und andererseits von einer inneren Wandung des Ölverteilerraums 3 begrenzt. Denkbar ist aber auch eine ausschließliche Begrenzung einer Ölkammer durch Trennwände.

Wie **Fig.2** anschaulich zeigt kann in Bezug auf die Welle 7 in Umfangsrichtung gesehen der Ölverteilerraum 3 beispielsweise einen kreissektorförmigen Querschnitt aufweisen und die Trennwände 2a, 2b den kreissektorförmigen Querschnitt des Ölverteilerraums 3 in hier drei voneinander getrennte teilsektorförmige Ölkammern 3a, 3b, 3c unterteilen.

Die Trennwände 2a, 2b weisen jeweils ein in den Ölverteilerraum 3 hineinragendes freies erstes Ende und ein beispielsweise an einer bodenseitigen inneren Wandung des Ölverteilerraums 3 befestigtes bzw. festgelegtes zweites Ende auf und dichten dort die Ölkammern 3a, 3b und 3c gegeneinander ab. Die Ölkammern 3a, 3b, 3c sind beispielsweise in der Richtung der Schwerkraft gesehen nach oben hin beispielsweise völlig offen. Der Ölzulauf 1 ist hier beispielsweise in der Richtung der Schwerkraft gesehen oberhalb der nach oben offenen Ölkammern 3a, 3b, 3c angeordnet.

Wenn dann in einem Füllmodus Öl über den Ölzulauf 1 in den Ölverteilerraum 3 einströmt, so füllen sich die Ölkammern 3a, 3b, 3c allesamt vollständig. Darüber hinaus ist je nach Ölverbrauch durch die Ölverbraucher auch eine komplette Füllung des Ölverteilerraums 3 möglich. Durch die ständige Ölnachförderung kann dann Öl über die ersten oberen Enden der Trennwände 2a, 2b in eine jeweils benachbarte Ölkammer 3a, 3b, 3c überlaufen.

Daher sind die Gestaltung und Lage der Ölkammern 3a, 3b, 3c und/oder des Ölzulaufs 1 vollkommen beliebig. Denkbar ist beispielsweise auch ein in der Richtung der Schwerkraft gesehen seitlich oder unten angeordneter Ölzulauf 1 und/oder auch Ölkammern, welche abgeschlossene Ölvolumina bilden, ausgenommen natürlich deren Zu- und Ablauf.

Bei einem Ausfall des pumpengetriebenen Schmierölkreislaufs beispielsweise infolge eines Pumpenfehlers wird kein neues Öl mehr über den Ölzulauf 1 in den Ölverteilerraum 3 nachgeführt während aber die oben genannten Ölverbraucher ständig weiteres Öl aus dem Ölverteilerraum 3 über die Ölkanäle 4a, 4b, 4c absaugen. Folglich tritt nach einiger Zeit ein Zustand ein, in welchem der Ölstand im Ölverteilerraum 3 unter das Niveau abgesunken ist, welches durch das erste obere Ende der Trennwände 2a, 2b der Ölkammern 3a, 3b, 3c definiert wird, welches hier in **Fig.2** beispielsweise identisch ist. Dann kann über diese Trennwände 2a, 2b kein Überströmen von Öl in eine benachbarte Ölkammer 3a, 3b, 3c mehr stattfinden. Lediglich das dann in der betreffenden Ölkammer 3a, 3b, 3c eingeschlossene Ölvolumen steht dann noch für eine Ölversorgung des an die betreffende Ölkammer 3a, 3b, 3c angeschlossenen Ölverbrauchers zur Verfügung. Die Zeitdauer, während der bei ausgefallenem pumpengetriebenen Schmierölkreislauf dann noch eine Ölversorgung eines oder mehrerer an eine Ölkammer angeschlossenen Ölverbraucher(s) möglich ist, wird dann durch die Größe des Ölvolumens der betreffenden Ölkammer 3a, 3b, 3c festgelegt. Folglich können durch eine geeignete Lage von Trennwände 2a, 2b vordefinierte Ölvolumina der Ölkammern 3a, 3b, 3c gebildet werden, die wiederum Zeiträume für eine Notölversorgung für die entsprechenden Ölverbraucher definieren.

Zusätzlich weisen die Mündungen der Ölkanäle 4a, und 4c bzw. 4b und 4c jeweils unterschiedliche Niveaus in Bezug zur Richtung der Schwerkraft auf, so dass auch die vertikale Lage dieser Mündungen den Umfang der Notölversorgung beeinflusst.

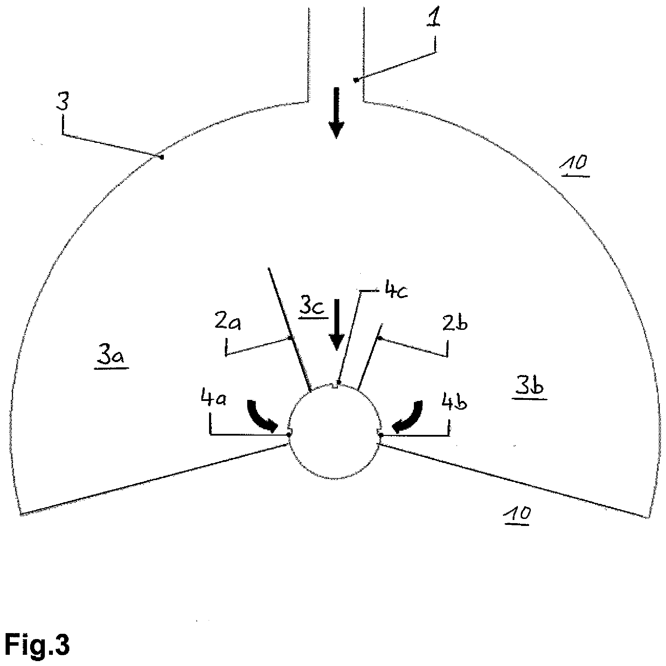

In **Fig.3** ist eine nicht erfindungsgemäße Ausführungsform gezeigt, bei welcher das freie erste Ende der linken Trennwand 2a ein höheres Niveau aufweist als das freie erste Ende der rechten Trennwand 2b. Dies führt dazu, dass in der linken Ölkammer 3a, welche das verdichterseitige Radiallager 5a versorgt das größte Ölvolumen für eine Notölversorgung zurückgehalten werden kann, während das Ölvolumen in der rechten Ölkammer 3b, welche das turbinenseitige Radiallager 5b versorgt das demgegenüber kleinere Ölvolumen für eine Notölversorgung zur Verfügung stellt. Das kleinste Ölvolumen steht indes in der mittleren Ölkammer 3c für das Axiallager zur Verfügung.

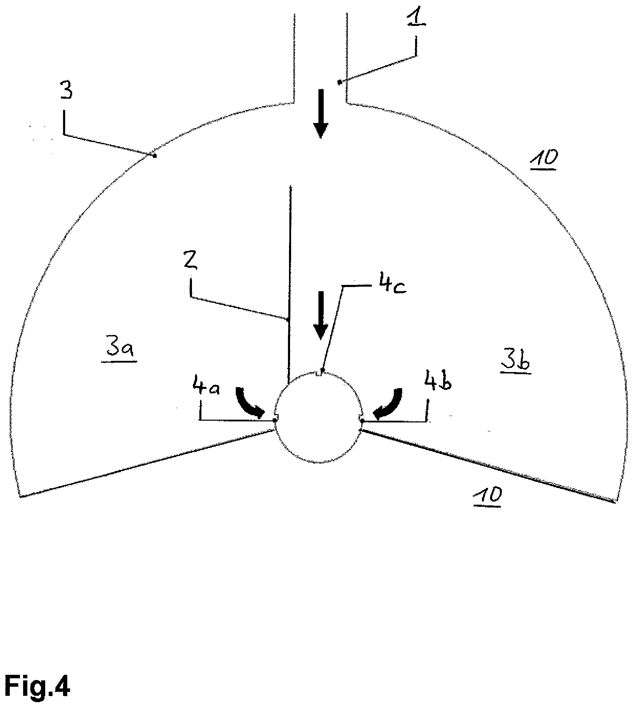

Bei der nicht erfindungsgemäßen Ausführungsform von **Fig.4** sind lediglich eine einzige Trennwand 2 und somit lediglich zwei Ölkammern 3a 3b vorgesehen. In die in **Fig.4** linke Ölkammer 3a mündet der Ölkanal 4a, welcher mit dem verdichterseitigen Radiallager 5a verbunden ist. Hingegen mündet in die in **Fig.4** rechte und gegenüber der linken Ölkammer 3a etwas größere Ölkammer 3b einerseits der Ölkanal 4b, welcher mit dem turbinenseitigen Radiallager 5b und andererseits der Ölkanal 4c, welcher mit dem Axiallager verbunden ist. Weiterhin liegt auch das vertikale Niveau der Mündung des Ölkanals 4b in der Ölkammer 3b niedriger als das vertikale Niveau der Mündung des Ölkanals 4c. Dies führt im Falle einer Notölversorgung dazu, dass für das verdichterseitige Radiallager 5b und das Axiallager zusammen etwas mehr Ölvolumen zur Verfügung steht als für das turbinenseitige Radiallager 5a. Weiterhin steht wegen der unterschiedlichen Niveaus der Mündungen der Ölkanäle 4b und 4c in der rechten Ölkammer 3b dem verdichterseitigen Radiallager 5b im Notölbetrieb ein größeres Ölvolumen zur Verfügung als dem Axiallager.

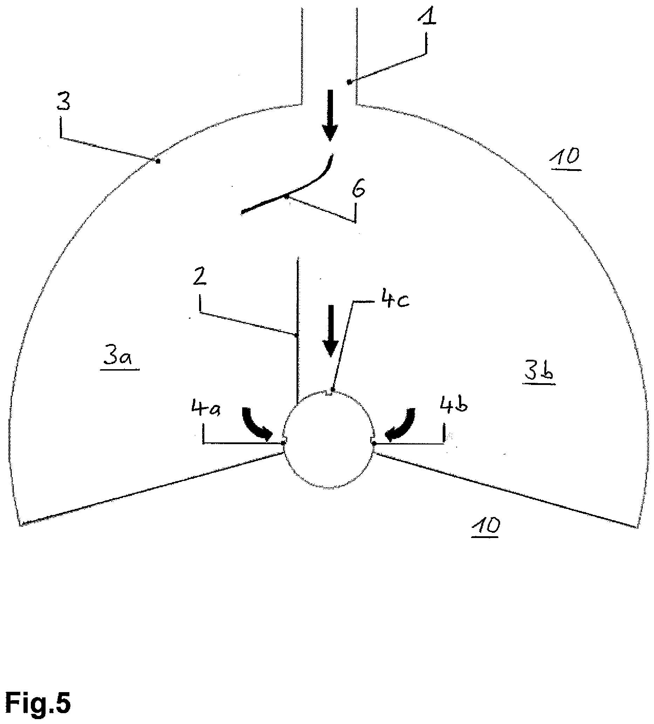

Bei der erfindungsgemäßen Ausführungsform von **Fig.5** sind der Ölzulauf 1 und demzufolge auch der Ölverteilerraum 3 an einen in Bezug zu dem Lagergehäuse 10 externen Öltank angeschlossen, welcher hier nicht sichtbar ist und welcher beispielsweise ein Element des pumpengetriebenen Schmierölkreislaufs bildet.

Weiterhin ist in dem Ölverteilerraum 3 in Strömungsrichtung des Öls gesehen eine der hier beispielsweise einzigen Trennwand 2 wie in **Fig.4** vorgeordnete Leiteinrichtung 6 vorgesehen, welche derart ausgebildet und angeordnet ist, dass sie den aus dem externen Öltank durch den Ölzulauf 1 einströmenden Ölvolumengesamtstrom ausschließlich in die linke Ölkammer 3a einleitet, wobei ein Ölvolumenteilstrom des in die linke Ölkammer 3a eingeleiteten Ölvolumengesamtstrom in einem Anfangsstadium nach einiger Zeit über das erste freie Ende der Trennwand 2 hinaus in die rechte Ölkammer 3b überläuft. Dabei kann auch vorgesehen sein, dass die rechte Ölkammer 3b ausschließlich von dem über das erste freie Ende der Trennwand überlaufenden Ölvolumenteilstrom ölversorgt ist. Die Ölkanäle 4a, 4b und 4c verbinden und münden in einer Weise wie oben zu **Fig.4** beschrieben.

Dann wird bei intaktem pumpengetriebenen Schmierölkreislauf ein erster Ölvolumenteilstrom des bedingt durch die Leiteinrichtung 6 in die linke Ölkammer 3a einströmenden Ölvolumengesamtstroms infolge des Ölverbrauchs durch das verdichterseitige Radiallager 5a abgesaugt, während ein zweiter Ölvolumenteilstrom über das erste freie Ende der Trennwand 2 in die linke Ölkammer 3b überläuft, wodurch die an die linke Ölkammer 3b angeschlossenen Ölverbraucher (turbinenseitiges Radiallager 5b, Axiallager) mit Öl versorgt werden.

Wenn dann aber bei einer Störung des pumpengetriebenen Schmierölkreislaufs (Notölbetrieb) der externe Öltank allmählich leerläuft, so läuft das verbleibende Restöl ausschließlich in die linke Ölkammer 3a nach während weiterhin Öl durch die an die linke und rechte Ölkammern 3a, 3b angeschlossenen Ölverbraucher abgesaugt wird. Dadurch sinkt der Ölstand in der linken Ölkammer 3a, so dass dieser irgendwann niedriger ist als das Niveau der Trennwand 2 an dessen ersten freien Ende. Folglich kann dann kein Ölvolumenteilstrom mehr von der linken Ölkammer 3a in die rechte Ölkammer 3b überlaufen, welche dann früher leerläuft als die linke Ölkammer 3a. Bedingt durch diese Maßnahmen kann daher die Ölversorgung der oder des an die linke Ölkammer 3a angeschlossenen Verbraucher(s) gegenüber des oder den an die rechte Ölkammer 3b angeschlossenen Verbraucher(s) priorisiert werden.

Die Leiteinrichtung 6 kann insbesondere wenigstens eine Leitschaufel aufweisen und in oder nach dem Ölzulauf 1 angeordnet sein. Insbesondere kann auch der Ölzulauf 1 derart angeordnet, ausgebildet bzw. ausgerichtet sein, dass er selbst die Leiteinrichtung ausbildet.

### Bezugszeichenliste

- 1: Ölzulauf
- 2a/b: Trennwände
- 3: Ölverteilerraum
- 3a/b/c: Ölkammern
- 4a/b/c: Ölkanäle
- 5a/b: Radiallager
- 6: Leiteinrichtung / Leitrippe
- 7: Welle
- 10: Lagergehäuse

## Patentansprüche

1. Abgasturbolader,
umfassend ein Gehäuse (10),
umfassend einen im Gehäuse (10) integrierten Ölverteilerraum (3), umfassend wenigstens einen im Gehäuse (10) ausgebildeten Ölzulauf (1), welcher mit dem Ölverteilerraum (3) in Verbindung steht und über welchen ein Ölstrom in den Ölverteilerraum (3) einströmt,
umfassend mehrere Ölverbraucher (5a, 5b), welche jeweils eine Strömungsverbindung zu dem Ölverteilerraum (3) aufweisen,
wobei der Ölverteilerraum (3) durch wenigstens eine Trennwand (2; 2a, 2b) in wenigstens zwei Ölkammern (3a, 3b, 3c) unterteilt ist, welche in Bezug zu dem Ölzulauf (1) derart angeordnet sind, dass ein über den Ölzulauf (1) zufließender Ölstrom in jede der wenigstens zwei Ölkammern (3a, 3b, 3c) gelangen kann,
wobei jede der wenigstens zwei Ölkammern (3a, 3b, 3c) über wenigstens einen Ölkanal (4a, 4b, 4c) mit wenigstens einem bestimmten und der jeweiligen Ölkammer (3a, 3b, 3c) zugeordneten Ölverbraucher (5a, 5b) verbunden ist,
wobei der Ölzulauf (1) und der Ölverteilerraum (3) Elemente eines pumpengetriebenen Ölkreislaufs sind,
wobei die Mündungen von wenigstens zwei Ölkanälen (4b, 4c) in derselben Ölkammer (3b) in Richtung der Schwerkraft gesehen unterschiedliche Niveaus aufweisen und/oder die Mündungen von wenigstens zwei Ölkanälen (4b, 4c), welche jeweils in unterschiedliche Ölkammern (3a, 3b) münden, bezogen auf die Richtung der Schwerkraft gesehen unterschiedliche Niveaus aufweisen,
wobei der Ölzulauf (1) und der Ölverteilerraum (3) an einen in Bezug zum Gehäuse externen Öltank angeschlossen sind, welcher ein Element des pumpengetriebenen Ölkreislaufs bildet,
und wobei eine Leiteinrichtung (6) vorgesehen ist, welche derart ausgebildet und angeordnet ist, dass sie den aus dem externen Öltank durch den Ölzulauf (1) einströmenden Ölvolumengesamtstrom ausschließlich in eine erste Ölkammer (3a) der wenigstens zwei Ölkammern (3a, 3b) einleitet.

2. Abgasturbolader nach dem vorhergehenden Anspruch, **dadurch gekennzeichnet, dass** die wenigstens zwei Ölkammern (3a, 3b, 3c) zur Aufnahme eines jeweils definierten Ölvolumens ausgebildet sind.

3. Abgasturbolader nach einem der vorhergehenden Ansprüche, **dadurch gekennzeichnet, dass** die wenigstens eine Trennwand (2a, 2b) ein in den Ölverteilerraum (3) hineinragendes freies erstes Ende und ein zweites, an einen Boden oder an eine Wandung des Ölverteilerraums (3) dichtend angebundenes Ende aufweist.

4. Abgasturbolader nach Anspruch 3, **dadurch gekennzeichnet, dass** die freien ersten Enden von wenigstens zwei Trennwänden (2a, 2b) bezogen auf die Richtung der Schwerkraft unterschiedliche Niveaus aufweisen.

5. Abgasturbolader nach einem der vorhergehenden Ansprüche, **dadurch gekennzeichnet, dass** die wenigstens eine Trennwand (2a, 2b) eine in die vertikale Richtung weisende Komponente aufweist.

6. Abgasturbolader nach einem der vorhergehenden Ansprüche, **dadurch gekennzeichnet, dass** der Ölzulauf (1) bezogen auf die Richtung der Schwerkraft in einer oberen Wandung des Ölverteilerraums (3) ausgebildet ist.

7. Abgasturbolader nach einem der vorhergehenden Ansprüche, **dadurch gekennzeichnet, dass** er wenigstens Folgendes umfasst: eine ein Verdichterrad und ein Turbinenrad tragende Welle (7), ein das Gehäuse (10) bildendes Lagergehäuse mit mehreren Radiallagern (5a, 5b) als Ölverbraucher zum Lagern der Welle (7), wobei der Ölverteilerraum (3) in dem Lagergehäuse integriert und der Ölzulauf (1) in dem Lagergehäuse ausgebildet ist, wobei jede der wenigstens zwei Ölkammern (3a, 3b) über wenigstens einen Ölkanal (4a, 4b, 4c) mit wenigstens einem bestimmten und der jeweiligen Ölkammer (3a, 3b) zugeordneten Radiallager (5a, 5b) verbunden ist.

8. Abgasturbolader nach Anspruch 7, **dadurch gekennzeichnet, dass** die mehreren Radiallager (5a, 5b) wenigstens ein verdichterseitiges Radiallager (5a) und wenigstens ein turbinenseitiges Radiallager (5b) der Welle (7) umfassen.

9. Abgasturbolader nach Anspruch 8, **dadurch gekennzeichnet, dass** in Bezug auf die Welle (7) in Umfangsrichtung gesehen der Ölverteilerraum (3) einen kreissektorförmigen Querschnitt aufweist und die wenigstens eine Trennwand (2a, 2b) den kreissektorförmigen Querschnitt des Ölverteilerraums (3) in mehrere voneinander getrennte teilsektorförmige Ölkammern (3a, 3b, 3c) unterteilt, wobei wenigstens eine erste teilsektorförmige Ölkammer (3a) über wenigstens einen ersten Ölkanal (4a) mit dem verdichterseitigen Radiallager (5a) der Welle (7) und wenigstens eine zweite teilsektorförmige Ölkammer (3b) über wenigstens einen zweiten Ölkanal (4b) mit dem turbinenseitigen Radiallager (5b) verbunden ist.

10. Abgasturbolader nach Anspruch 9, **dadurch gekennzeichnet, dass** der wenigstens eine erste Ölkanal (4a) gegenüber dem wenigstens einen zweiten Ölkanal (4b) bezogen auf eine Axialrichtung der Welle (7) axial versetzt angeordnet ist.

11. Abgasturbolader nach einem der Ansprüche 7 bis 10, **dadurch gekennzeichnet, dass** sich der Ölverteilerraum (3) in axialer Richtung gesehen über alle Radiallager (5a, 5b) erstreckt.

12. Abgasturbolader nach einem der Ansprüche 8 bis 11, **dadurch gekennzeichnet, dass** die wenigstens zwei Ölverbraucher neben den mehreren Radiallagern (5a, 5b) wenigstens zusätzlich Folgendes beinhalten: Eine Spritzölkühlungseinrichtung und ein Axiallager der Welle (7).

13. Abgasturbolader nach einem der vorhergehenden Ansprüche, **dadurch gekennzeichnet, dass** der Ölverteilerraum (3) bezüglich der Richtung der Schwerkraft wenigstens teilweise oberhalb der wenigstens zwei Ölverbraucher (5a, 5b) angeordnet ist.

14. Brennkraftmaschine mit wenigstens einem Abgasturbolader nach wenigstens einem der vorhergehenden Ansprüche.

## Claims

1. An exhaust gas turbocharger,
comprising a housing (10),
comprising an oil distribution chamber (3) integrated in the housing (10),
comprising at least one oil feed (1) formed in the housing (10), which communicates with the oil distribution chamber (3) and via which an oil flow flows into the oil distribution chamber (3),
comprising multiple oil consumers (5a, 5b) each of which comprises a flow connection to the oil distribution chamber (3),
wherein the oil distribution chamber (3) is divided by at least one partition wall (2; 2a, 2b) into at least two oil chambers (3a, 3b, 3c), which with respect to the oil feed (1) are arranged in such a manner that an oil flow flowing via the oil feed (1) can enter each of the at least two oil chambers (3a, 3b, 3c),
wherein each of the at least two oil chambers (3a, 3b, 3c) is connected via at least one oil channel (4a, 4b, 4c) to at least one certain oil consumer (5a, 5b) assigned to the respective oil chamber (3a, 3b, 3c), wherein the oil feed (1) and the oil distribution chamber (3) are elements of a pump-driven oil circuit, wherein the mouths of at least two oil channels (4b, 4c) in the same oil chamber (3b), seen in the direction of gravity, have different levels and/or the mouths of at least two oil chambers (4b, 4c), each of which opens into different oil chambers (3a, 3b), based on the direction of gravity, have different levels,
wherein the oil feed (1) and the oil distribution chamber (3) are connected to an, with respect to the housing, external oil tank which forms an element of the pump-driven oil circuit,
and wherein a conducting device (6) is provided, which is configured and arranged in such a manner that it conducts the total oil volume flow flowing from the external oil tank through the oil feed (1) exclusively into a first oil chamber (3a) of the at least oil chambers (3a, 3b).

2. The exhaust gas turbocharger according to an the preceding claim,
**characterised,**
**in that** the at least two oil chambers (3a, 3b, 3c) are formed for receiving a respective defined oil volume.

3. The exhaust gas turbocharger according to any one of the preceding claims,
**characterised,**
**in that** the at least one partition wall (2a, 2b) comprises a free first end projecting into the oil distribution chamber (3) and a second end which is joined to a bottom or to a wall of the oil distribution chamber (3) in a sealing manner.

4. The exhaust gas turbocharger according to Claim 3,
**characterised,**
**in that** the free first ends of at least two partition walls (2a, 2b), based on the direction of gravity, have different levels.

5. The exhaust gas turbocharger according to any one of the preceding claims,
**characterised,**
**in that** the at least one partition wall (2a, 2b) has a component facing in the vertical direction.

6. The exhaust gas turbocharger according to any one of the preceding claims,
**characterised,**
**in that** the oil feed (1), based on the direction of gravity, is formed in an upper wall of the oil distribution chamber (3).

7. The exhaust gas turbocharger according to any one of the preceding claims,
**characterised,**
**in that** it comprises at least the following:
a shaft (7) carrying a compressor wheel and a turbine wheel, a bearing housing with multiple radial bearings (5a, 5b) as oil consumer for mounting the shaft (7) forming the housing (10), wherein the oil distribution chamber (3) is integrated in the bearing housing and the oil feed (1) is formed in the bearing housing, wherein each of the at least two oil chambers (3a, 3b) are connected via at least one oil channel (4a, 4b, 4c) to at least one certain radial bearing (5a, 5b) assigned to the respective oil chamber (3a, 3b).

8. The exhaust gas turbocharger according to Claim 7,
**characterised,**
**in that** the multiple radial bearings (5a, 5b) comprise at least one compressor-side radial bearing (5a) and at least one turbine-side radial bearing (5b) of the shaft (7) .

9. The exhaust gas turbocharger according to Claim 8, **characterised,**
**in** the with respect to the shaft (7) seen in the circumferential direction, the oil distribution chamber (3) has a circular sector-shaped cross-section and the at least one partition wall (2a, 2b) divides the circular sector-shaped cross-section of the oil distribution chamber (3) into multiple part sector-shaped oil chambers (3a, 3b, 3c) which are separated from one another, wherein at least one first part sector-shaped oil chamber (3a) is connected via at least one first oil channel (4a) to the compressor-side radial bearing (5a) of the shaft (7) and at least one second part sector-shaped oil chamber (3b) via at least one second oil channel (4b) to the turbine-side radial bearing (5b).

10. The exhaust gas turbocharger according to Claim 9,
**characterised,**
**in that** the at least one first oil channel (4a) is arranged relative to the at least one second oil channel (4b), axially offset with respect to an axial direction of the shaft (7).

11. The exhaust gas turbocharger according to any one of the Claims 7 to 10,
**characterised,**
**in that** the oil distribution chamber (3), seen in the axial direction, extends over all radial bearings (5a, 5b) .

12. The exhaust gas turbocharger according to any one of the Claims 8 to 11,
**characterised,**
**in that** the at least two oil consumers, besides the multiple radial bearings (5a, 5b), additionally include at least the following:
a spray oil cooling device and an axial bearing of the shaft (7).

13. The exhaust gas turbocharger according to any one of the preceding claims,
**characterised,**
**in that** the oil distribution chamber (3), with respect to the direction of gravity, is arranged at least partially above the at least two oil consumers (5a, 5b) .

14. An internal combustion engine having at least one exhaust gas turbocharger according to at least one of the preceding claims.

## Revendications

1. Turbocompresseur de gaz d'échappement,
comprenant un carter (10),
comprenant un espace de distribution d'huile (3) intégré dans le carter (10),
comprenant au moins une entrée d'huile (1) formée dans le carter (10), qui est reliée à l'espace de distribution d'huile (3) et par laquelle un flux d'huile s'écoule dans la chambre de distribution d'huile (3), comprenant plusieurs consommateurs d'huile (5a, 5b), dont chacun possède présente un raccordement fluidique à la chambre de distribution d'huile (3),
dans lequel la chambre de distribution d'huile (3) est divisée par au moins une cloison (2 ; 2a, 2b) en au moins deux chambres d'huile (3a, 3b, 3c), qui sont disposées de telle manière, par rapport à l'entrée d'huile (1), qu'un courant d'huile s'écoulant via l'entrée d'huile (1) puisse atteindre chacune des au moins deux chambres à huile (3a, 3b, 3c),
dans lequel chacune des au moins deux chambres à huile (3a, 3b, 3c) est reliée par au moins un canal d'huile (4a, 4b, 4c) à au moins un consommateur d'huile spécifique (5a, 5b) associé à la chambre d'huile respective (3a, 3b, 3c),
dans lequel l'entrée d'huile (1) et la chambre de distribution d'huile (3) sont des éléments d'un circuit d'huile entraîné par pompe,
dans lequel les embouchures d'au moins deux canaux d'huile (4b, 4c) dans la même chambre à huile (3b) présentent des niveaux différents vus dans la direction de la force de gravité et/ou les embouchures d'au moins deux canaux d'huile (4b, 4c), qui débouchent chacun dans des chambres d'huile différentes (3a, 3b), présentent des niveaux différents lorsqu'on les regarde dans la direction de la force de gravité,
dans lequel l'entrée d'huile (1) et la chambre de distribution d'huile (3) sont raccordées à un réservoir d'huile externe par rapport au carter, qui forme un élément du circuit d'huile entraîné par pompe
et dans lequel est prévu un dispositif de guidage (6), qui est conçu et agencé de manière à ce qu'il guide le flux total de volume d'huile s'écoulant depuis le réservoir d'huile externe à travers l'entrée d'huile (1) exclusivement dans une première chambre à huile (3a) des au moins deux chambres à huile (3a, 3b).

2. Turbocompresseur à gaz d'échappement selon la revendication précédente, **caractérisé en ce que** les au moins deux chambres à huile (3a, 3b, 3c) sont formées pour recevoir un volume d'huile défini.

3. Turbocompresseur à gaz d'échappement selon une des revendications précédentes, **caractérisé en ce que** la au moins une cloison (2a, 2b) présente une première extrémité libre dépassant en saillie dans l'espace de répartition d'huile (3) et une deuxième extrémité rattachée de manière étanche à un plancher ou un mur de l'espace de distribution d'huile (3).

4. Turbocompresseur à gaz d'échappement selon la revendication 3, **caractérisé en ce que** les premières extrémités libres d'au moins deux cloisons (2a, 2b) présentent des niveaux différents en fonction de la direction de la force de gravité.

5. Turbocompresseur à gaz d'échappement selon une des revendications précédentes, **caractérisé en ce que** la au moins une cloison (2a, 2b) présente une composante pointant dans la direction verticale.

6. Turbocompresseur à gaz d'échappement selon une des revendications précédentes, **caractérisé en ce que** l'entrée d'huile (1) par rapport à la direction de la force de gravité est réalisée dans une paroi supérieure de l'espace de distribution d'huile (3).

7. Turbocompresseur à gaz d'échappement selon une des revendications précédentes, **caractérisé en ce qu'**il comprend au moins les éléments suivants : un arbre portant une roue de compresseur (7) et une roue de turbine, un carter (10) formant carter de roulement avec plusieurs roulements radiaux (5a, 5b) comme consommateur d'huile pour positionner l'arbre (7), dans lequel l'espace de distribution d'huile (3) est intégré dans le carter de roulement et l'entrée d'huile (1) est formée dans le carter de roulement, dans lequel chacune des au moins deux chambres à huile (3a, 3b) comportant au moins un canal d'huile (4a, 4b, 4c) est reliée à au moins un roulement radial spécifique (5a, 5b) associé à la chambre d'huile respective (3a, 3b).

8. Turbocompresseur à gaz d'échappement selon la revendication 7, **caractérisé en ce que** la pluralité de roulements radiaux (5a, 5b) comprennent au moins un roulement radial côté compresseur (5a) et au moins un roulement radial côté turbine (5b) de l'arbre (7).

9. Turbocompresseur à gaz d'échappement selon la revendication 8, **caractérisé en ce que**, vue dans la direction circonférentielle par rapport à l'arbre (7), la chambre de distribution d'huile (3) présente une section transversale en forme de secteur circulaire et la au moins une cloison (2a, 2b) divise la section transversale en forme de secteur circulaire de la chambre de distribution d'huile (3) en plusieurs chambres à huile séparées en forme de sous-secteur (3a, 3b, 3c), dans lequel au moins une première chambre d'huile en forme de sous-secteur de chambre d'huile (3a) est reliée via au moins un premier canal d'huile (4a) avec le palier radial (5a) côté compresseur de l'arbre (7) et au moins une deuxième chambre d'huile en forme de sous-secteur (3b) est reliée au palier radial côté turbine (5b) via au moins un deuxième canal d'huile (4b) .

10. Turbocompresseur à gaz d'échappement selon la revendication 9, **caractérisé en ce que** le au moins un premier canal d'huile (4a) est disposé en décalage axial par rapport à au moins un deuxième canal d'huile (4b) par rapport à une direction axiale de l'arbre (7).

11. Turbocompresseur à gaz d'échappement selon une des revendications 7 à 10, **caractérisé en ce que** la chambre de distribution d'huile (3), vue dans la direction axiale, s'étend sur tous les paliers radiaux (5a, 5b).

12. Turbocompresseur à gaz d'échappement selon une des revendications 8 à 11, **caractérisé en ce que** les au moins deux consommateurs d'huile, en plus de la pluralité de paliers radiaux (5a, 5b), contiennent au moins en plus les éléments suivants : un dispositif de refroidissement d'huile par pulvérisation et un roulement axial de l'arbre (7).

13. Turbocompresseur à gaz d'échappement selon une des revendications précédentes, **caractérisé en ce que** la chambre de distribution d'huile (3) est disposée au moins partiellement au-dessus des au moins deux consommateurs d'huile (5a, 5b) par rapport à la direction de la force de gravité.

14. Moteur à combustion interne comportant au moins un turbocompresseur à gaz d'échappement selon au moins une des revendications précédentes.
